# EUROPÄISCHE PATENTSCHRIFT

(11) **EP 3 895 852 B1**
(45) Veröffentlichungstag und Bekanntmachung des Hinweises auf die Patenterteilung: **21.08.2024**
(21) Anmeldenummer: 21160515.9
(22) Anmeldetag: 03.03.2021
(51) Int. Cl.: B25J 9/10, B25J 13/02, B25J 13/08, B66C 23/00

(54) **MENSCH-ROBOTER-KOLLABORATIONS-ANLAGE**
HUMAN-MACHINE COLLABORATION SYSTEM
SYSTÈME DE COLLABORATION ENTRE L'HOMME ET LES ROBOTS

(30) Priorität: 27.03.2020 DE 102020108513
(43) Veröffentlichungstag der Anmeldung: 20.10.2021
(73) Patentinhaber: J. Schmalz GmbH, 72293 Glatten (DE)
(72) Erfinder: Schaaf, Walter, 72250 Freudenstadt-Grüntal (DE); Kuolt, Harald, 78586 Deilingen (DE)
(74) Vertreter: DREISS Patentanwälte PartG mbB

(56) Entgegenhaltungen:
- EP-A1- 2 653 954
- WO-A1-2014/195373
- JP-A- 2013 052 192
- JP-A- H11 309 184
- US-A- 6 104 379
- US-A1- 2003 223 844
- US-B2- 9 833 895

## Beschreibung

Die Erfindung betrifft eine Mensch-Roboter-Kollaborations-Anlage.

Solche Mensch-Roboter-Kollaborations-Anlagen (kurz MRK-Anlagen) ermöglichen eine Zusammenarbeit von Mensch und Roboter in einem gemeinsamen Arbeitsbereich. Während in der Vergangenheit die Arbeitsbereiche von Robotern und Menschen vorzugsweise getrennt waren, besteht zunehmend das Bestreben, Menschen und Roboter enger zusammenarbeiten (kollaborieren) zu lassen. Manche Prozesse können effizienter durchgeführt werden, wenn Mensch und Roboter "Hand in Hand" arbeiten und bestimmte Arbeitsschritte gemeinsam ausführen. Hierzu ist es erforderlich, dass Mensch und Roboter sich nicht nur einen Arbeitsbereich teilen, sondern unter Umständen sogar arbeitsbedingt einander berühren.

Herkömmliche Industrieroboter-Anlagen sind aber für die Kollaboration mit Menschen nicht gut geeignet, da die vergleichsweise schweren Industrieroboter hohe Geschwindigkeiten und Kräfte entwickeln können, welche ein Verletzungsrisiko für den Menschen darstellen.

MRK-Anlagen der eingangs genannten Art umfassen daher sog. "kollaborierende Roboter" ("Cobots"). Solche Roboter sind grundsätzlich dazu ausgebildet, eine Bedienperson bei Handlungen zu unterstützten. Die Roboter können mit einer integrierten Sensorik zur Erfassung einer Kraft- und/oder Drehmomenteinwirkung auf den Roboter ausgestattet sein und kraft- und/oder drehmomentgesteuerte Roboterarme aufweisen. Durch die integrierte Sensorik kann ein solcher Roboter einen Berührungskontakt zwischen Mensch und Roboterarm erfassen und dann in Abhängigkeit der erfassten Kräfte den Roboterarm ansteuern. Dabei sind die Roboter üblicherweise derart eingerichtet, dass ihr Roboterarm einer Krafteinwirkung nachgibt, also insbesondere in Einleitungsrichtung einer Kraft ausweicht. Hierdurch kann eine Verletzung des Menschen bei Kontakt mit dem Roboter verhindert werden. Es ist aber auch denkbar, dass der Roboter programmgesteuert ein Bewegungsmuster ausführt.

Bei den bekannten MRK-Anlagen sind die Roboter zum Teil derart eingerichtet, dass sie mit ihren Roboterarmen vorprogrammierten Bewegungsbahnen oder Bewegungsmustern folgen (bspw. um wiederholend Gegenstände aus einem Behälter zu entnehmen und diese an einer vorgegebenen Position an eine Bedienperson zu übergeben). Es ist auch bekannt, einen linear oder rotatorisch gelenkige Kragarme mit Seilwinde bedarfsgerecht anzusteuern. Zu diesem Zweck wurden beispielsweise "intelligente" Handschuhe entwickelt, welche mit Sensoren und/oder Signalgebern ausgestattet sind und dazu ausgebildet sind, Signale auf Basis von Nutzereingaben oder - verhalten zu generieren und/oder eine Bewegung einer Hand einer Bedienperson zu detektieren und z.B. die Seilwinde entsprechend der Handbewegung anzusteuern (Gestensteuerung).

Aus der JP H11 309184 A ist eine Hebehilfe zur Unterstützung einer Bedienperson beim Anheben einer Person bekannt. Aus der JP 2013 052192 A ist eine körpergetragene Hebehilfe zur Unterstützung einer Bedienperson beim Anheben von Gegenständen bekannt.

Die vorliegende Erfindung beschäftigt sich mit der Aufgabe, eine Mensch-Roboter-Kollaboration zu vereinfachen und zu verbessern, insbesondere Mensch und Roboter eng miteinander zu verknüpfen.

Diese Aufgabe wird durch eine Mensch-Roboter-Kollaborations-Anlage mit den Merkmalen des Anspruchs 1 gelöst.

Die Mensch-Roboter-Kollaborations-Anlage (nachfolgend kurz "MRK-Anlage") ist insbesondere zur personengeführten (d.h. durch eine Bedienperson der MRK-Anlage geführte) Handhabung eines Gegenstandes mittels eines Handhabungsroboters oder mit Unterstützung eines Handhabungsroboters ausgebildet. Ein mögliches Einsatzgeiet ist die zur Unterstützung einer Bedienperson beim Transportieren eines Gegenstandes.

Die MRK-Anlage umfasst einen Roboter mit wenigstens einem Roboterarm, der motorisch angetriebenen ist. Der Roboterarm ist dazu eingerichtet, z.B. programmgesteuert oder kraft- und/oder drehmomentgesteuert Bewegungen auszuführen. Der Roboter ist derart ausgebildet, dass eine Bewegung des wenigstens einen Roboterarms in Abhängigkeit einer Kraft- und/oder Drehmomenteinwirkung auf den wenigstens einen Roboterarm gesteuert, insbesondere geregelt, werden kann. Insbesondere ist der Roboter derart ausgebildet, dass er den wenigstens einen Roboterarm in Einleitungsrichtung einer auf den wenigstens einen Roboterarm ausgeübten Kraft verfährt. Denkbar ist jedoch auch, dass der Roboterarm zusätzlich programmgesteuert ein vorgegebenes Bewegungsmuster ausführt, beispielsweise derart, dass ein menschlicher Bediener bei der Handhabung eines Gegenstands unterstützt wird.

Zur Erfassung einer Kraft- und/oder Drehmomenteinwirkung auf den wenigstens einen Roboterarm weist dieser Roboterarm eine entsprechend ausgebildete, integrierte Sensoreinrichtung auf.

Der wenigstens eine Roboterarm weist, insbesondere an einem freien Ende, einen Endabschnitt auf. Es kann z.B. ein Handhabungsroboter mit einem Roboterarm verwendet werden, bei dem der Endabschnitt des Roboterarms in üblicher Weise zur Verbindung mit einem Handhabungswerkzeug ausgebildet ist. Denkbar ist beispielsweise, einen üblichen Roboterarm zu verwenden, wobei ein endständiger Flanschabschnitt des Roboterarms den Endabschnitt bildet. Beispielsweise kann es sich bei dem Flanschabschnitt um einen endständig angeordneten Werkzeugflansch handeln. Die MRK-Anlage umfasst ferner eine mit dem Endabschnitt des wenigstens einen Roboterarms verbundene Kopplungseinrichtung. Außerdem umfasst die MRK-Anlage wenigstens eine Handanbindung zur Kopplung mit einer Hand einer Bedienperson, so dass Kräfte von dem Roboterarm an die Bedienperson und/oder von der Bedienperson an den Roboterarm übertragen werden können.

Die Handanbindung bezeichnet insofern eine Verbindungseinrichtung, welche eine Kopplung der Hand einer Bedienperson mit dem Endabschnitt ermöglicht, um Kräfte zu übertragen. Die Handanbindung kann in verschiedener Weise ausgestaltet sein. Denkbar ist beispielsweise eine Ausgestaltung als Manschette, welche die Handwurzel und ggf. auch das Handgelenk der Hand umfängt. Eine solche Manschette und je nach Bedarf zumindest abschnittsweise flexibel oder starr ausgebildet sein. Dadurch kann einerseits eine gute Kraftkopplung ermöglicht werden, andererseits ein möglichst komfortables Tragegefühl erreicht werden.

Als Materialien kommen z.B. Textilien oder Kunststoffteile in Frage, z.B. mit generativen Fertigungstechniken hergestellt (insbesondere 3D-Druck). Insbesondere mit generativen Fertigungstechniken können individuell angepasste Handanbindungen erzeugt werden, welche z.B. Freiformflächen aufweisen, die sich passgenau an die Hand des jeweiligen Bedieners anschmiegen. Auch können Flächen individuell an geeigneten Stellen durchbrochen werden, um z.B. eine Belüftung zu ermöglichen.

Eine vorteilhafte Ausgestaltung für die Handanbindung ist die Form eines Bedienhandschuhs. Dieser ist insofern zur, insbesondere formschlüssigen, Aufnahme einer Hand einer Bedienperson ausgebildet.

Die wenigstens eine Handanbindung ist über die Kopplungseinrichtung mit dem Endabschnitt des wenigstens einen Manipulators kraftgekoppelt verbindbar, insbesondere lösbar verbindbar. Insofern können über die Kopplungseinrichtung Kräfte und/oder Drehmomente zwischen der wenigstens einen Handanbindung und dem wenigstens einen Manipulator übertragen werden.

Eine solche Ausgestaltung ermöglicht es einer Bedienperson mit dem Roboter motorisch zu "verschmelzen": Hat die Bedienperson die Handanbindung angekoppelt (z.B. den wenigstens einen Bedienhandschuh angezogen), so werden bei einer Handbewegung der Bedienperson über die Kopplungseinrichtung Kräfte auf den mit der Handanbindung gekoppelten Roboterarm übertragen.

Erfindunsgemäß kann der Roboter diese Kräfte mittels der integrierten Sensoreinrichtung erfassen und - in Abhängigkeit dieser Kräfte - den wenigstens einen Roboterarm ansteuern. Der Roboter "spürt" sozusagen über die integrierte Sensoreinrichtung eine Bewegung der Hand der Bedienperson und kann den wenigstens einen Roboterarm in Abhängigkeit dessen verfahren. Erfindungsgemäß kann eine Bewegung des wenigstens einen Manipulators direkt über eine Bewegung der Hand der Bedienperson gesteuert werden. Vorzugsweise ist der wenigstens eine Roboterarm derart kraft- und/oder drehmomentgesteuert, dass er, im Zuge einer Krafteinwirkung auf ihn, in Einleitungsrichtung der Kraft verfährt. Insofern kann der wenigstens eine Roboterarm einer Handbewegung der Bedienperson nachgeführt werden. Dies ermöglicht nicht nur eine besonders intuitive und ergonomische Steuerung des Roboters, vielmehr verschmelzen Roboter und Bedienperson zu einer gemeinsamen Bewegungsgruppe. Denkbar ist aber auch, dass der Roboterarm zusätzlich ein vorgegebenes, programmiertes Bewegungsmuster ausführt und die Bedienperson entsprechend bei einer auszuführenden Handlung unterstützt.

Eine solche Robotersteuerung ermöglicht es beispielsweise ein Werkzeug (z.B. ein Bearbeitungswerkzeug oder ein Greifwerkzeug), welches an dem wenigstens einen Roboterarm angeordnet ist, handgeführt aber dennoch von dem Roboter gestützt an ein zu bearbeitendes Werkstück anzufahren. Insbesondere kann eine solche MRK-Anlage aber auch dazu verwendet werden, eine Bedienperson beim Handhaben und Transportieren eines Gegenstands zu unterstützen.

So kann die Bedienperson z.B. mittels des wenigstens einen Bedienhandschuhs einen Gegenstand zunächst wie mit einem gewöhnlichen Arbeitshandschuh greifen. Der wenigstens eine Bedienhandschuh kann dabei auch einen gewissen Schutz beim Greifen bieten. Insbesondere bildet der wenigstens eine Bedienhandschuh keine zusätzlichen Störkonturen, welche die Bedienperson beim Greifen eines Gegenstands einschränken. Beim Anheben des Gegenstands kann z.B. der Roboter die Gewichtskraft des Gegenstands zumindest anteilig aufnehmen und z.B. in den Boden einleiten. Insofern muss die Gewichtskraft zum Halten des Gegenstands von der Bedienperson nicht selbst aufgebracht werden. Mit anderen Worten kann die Hand der Bedienperson zwar als Endeffektor zum Greifen des Gegenstands wirken, die Last bzw. einen Teil der Last trägt jedoch der Roboter. Dadurch, dass der wenigstens eine Roboterarm einer Bewegung der Hand folgen kann (siehe oben), kann die Bedienperson den Gegenstand wie gewöhnlich manövrieren. Insgesamt ermöglicht es eine solche MRK-Anlage daher, einen Gegenstand auf körperschonende aber dennoch flexible Weise zu manövrieren.

Besonders vorteilhaft ist es, wenn der wenigstens eine Roboterarm mehrgelenkig ausgebildet ist, insbesondere umfassend mehrere gelenkig miteinander verbundene Glieder. Die Bedienperson kann dann die Handanbindung in vorzugsweise beliebigen Bewegungsbahnen im Raum bewegen, sodass eine Bewegung mit der Handanbindung von der Bedienperson als sehr "natürlich" wahrgenommen wird. Insbesondere handelt es sich bei dem Roboter um einen MRK-tauglichen Leichtbauroboter umfassend wenigstens einen mehrgelenkigen Roboterarm.

Es ist möglich, dass an einem Roboterarm mehrere, insbesondere zwei Handanbindungen angeordnet sind. Dann kann eine Bedienperson einen Gegenstand mit zwei Händen greifen. Es ist auch möglich, dass die MRK-Anlage zwei Roboterarme umfasst, wobei an jedem Roboterarm eine Handanbindung vorgesehen ist. Dann kann eine Bedienperson beide Hände voneinander unabhängig bewegen.

Dadurch, dass die im Roboter integrierte Sensoreinrichtung zur Erfassung einer von der Bedienperson auf den Roboterarm ausgeübten Kraft verwendet werden kann, ist eine solche MRK-Anlage vergleichsweise kostengünstig und kompakt aufgebaut. Insbesondere umfasst die wenigstens eine Handanbindung keine Sensoren und keine Steuereinrichtung. Die wenigstens eine Handanbindung ist insofern insbesondere sensorfrei und vorzugsweise auch elektronikfrei ausgebildet, sozusagen "ohne eigene Intelligenz". Eine solche Handanbindung ist besonders robust und zudem kostengünstig. Es ist daher in vorteilhafterweise möglich, bei vergleichsweise geringem Kosteneinsatz für jeden Mitarbeiter individuell angepasste (z.B. hinsichtlich Größe, Material, Einsatzzweck, etc.) Handanbindungen (z.B. Bedienhandschuhe) vorzuhalten.

Die MRK-Anlage kann ferner eine Steuereinrichtung, insbesondere Regelungseinrichtung, umfassen, welche dazu ausgebildet ist, den Roboter anzusteuern. Insbesondere ist die Steuereinrichtung dazu ausgebildet, den Roboter derart anzusteuern, dass der Roboter den wenigstens einen Roboterarm in Einleitungsrichtung einer über die wenigstens eine Handanbindung in den wenigstens einen Roboterarm eingeleiteten Kraft bewegt. Insofern kann der Roboter mittels der Steuereinrichtung insbesondere derart angesteuert werden, dass der wenigstens eine Roboterarm einer Handbewegung der Bedienperson folgt. Insbesondere wirkt die Steuereinrichtung mit der integrierten Sensoreinrichtung zusammen. Die Steuereinrichtung kann aber auch gemäß einem vorgegebenen Bewegungsmuster ansteuern.

Die Sensoreinrichtung umfasst vorzugsweise mehrere Kraft- und/oder Drehmomentsensoren. Insbesondere wirken die Sensoren an Gelenken und/oder Antriebseinrichtungen des wenigstens einen Roboterarms und sind vorzugsweise auch dort angeordnet.

Die Handanbindung weist insbesondere eine Öffnung zum Einführen einer Hand der Bedienperson auf. Bei einer Ausgestaltung der Handanbindung als Bedienhandschuh weist dieser entsprechend eine Handschuhöffnung zum Einführen der Hand auf. Besonders vorteilhaft ist es, wenn die Handanbindung bzw. Bedienhandschuh derart ausgebildet ist, dass dann, wenn die Handanbindung mit der Kopplungseinrichtung gekoppelt ist, die Öffnung bzw. Handschuhöffnung derart aufgespannt ist, dass eine Bedienperson eine Hand in die Handanbindung einschieben kann, insbesondere durch eine geradlinige Relativbewegung. Dies ermöglicht es der Bedienperson, die Handanbindung auf besonders einfache und schnelle Weise an- und wieder ausziehen und sich somit auf einfache Weise mit dem Roboter zu verbinden und bei Bedarf wieder von diesem zu trennen, bspw. um in einer Notsituation die MRK-Anlage schnell verlassen zu können. Dies ist insbesondere bei solchen Ausgestaltungen vorteilhaft, bei denen die wenigstens eine Handanbindung über die Kopplungseinrichtung fest mit dem wenigstens einen Manipulator verbunden ist.

Es ist auch möglich, dass die Kopplungseinrichtung derart ausgebildet ist, dass die wenigstens eine Handanbindung an dem Endabschnitt des wenigstens einen Roboterarms lösbar ankoppelbar und entkoppelbar und insbesondere wieder ankoppelbar ist. Beispielsweise ist es denkbar, dass die Kopplungseinrichtung eine Wechselkupplung umfasst, z.B. in der Art einer Clipsverbindung. Dies ermöglicht es einer Bedienperson, sich z.B. auf einfache Weise mit dem Bedienhandschuh von der MRK-Anlage "auszuklinken" (bspw. um von der MRK-Anlage unabhängige Arbeit zu verrichten) bzw. sich bei Bedarf wieder "einzuklinken". Bei einer solchen Ausgestaltung ist es zudem auf einfache und kosteneffiziente Weise realisierbar, dass jeder Mitarbeiter individuell auf ihn angepasste Bedienhandschuhe besitzt und sich über die Wechselkupplung mit der MRK-Anlage verbinden kann. Die Wechselkupplung muss insbesondere keinen großen Kräften standhalten, da die Robotersteuerung über entsprechend kraftempfindliche Sensorik erfolgen kann. Somit kann die Wechselkupplung entsprechend leichtgängig und komfortabel bedienbar ausgebildet sein.

Erfindungsgemäß umfasst die Kopplungseinrichtung eine Seilverbindung. Die Seilverbindung umfasst wenigstens ein Tragseil, welches die wenigstens eine Handanbindung mit dem Endabschnitt des wenigstens einen Roboterarms verbindet. Eine solche Ausgestaltung ermöglicht es, die Handanbindung in gewissen Grenzen relativ zu dem Roboterarm zu verschieben. Es besteht somit auch bei feststehender Position des Roboterarms ein gewisser Aktionsradius, was eine Handhabung erleichtert. Beispielsweise ist es bei einer solchen Ausgestaltung mit Seilverbindung nicht zwingend erforderlich, den wenigstens einen Roboterarm positionsgenau relativ zu einem Gegenstand zu platzieren, um diesen Gegenstand anheben zu können.

Im Rahmen einer vorteilhaften Ausgestaltung der MRK-Anlage kann die Seilverbindung zwei Tragseile umfassen, wobei jedes Tragseil mit einer Handanbindung verbunden oder verbindbar ist und wobei die beiden Tragseile über eine Umlenkeinrichtung mit demselben Endabschnitt des wenigstens einen Roboterarms verbunden sind. Dann kann die Bedienperson einen Gegenstand mit zwei Händen angreifen. Gleichzeitig ist durch die Seilverbindung eine gewisse Bewegungsfreiheit gegeben, sodass auch Gegenstände unterschiedlicher Größe flexibel gegriffen und manövriert werden können.

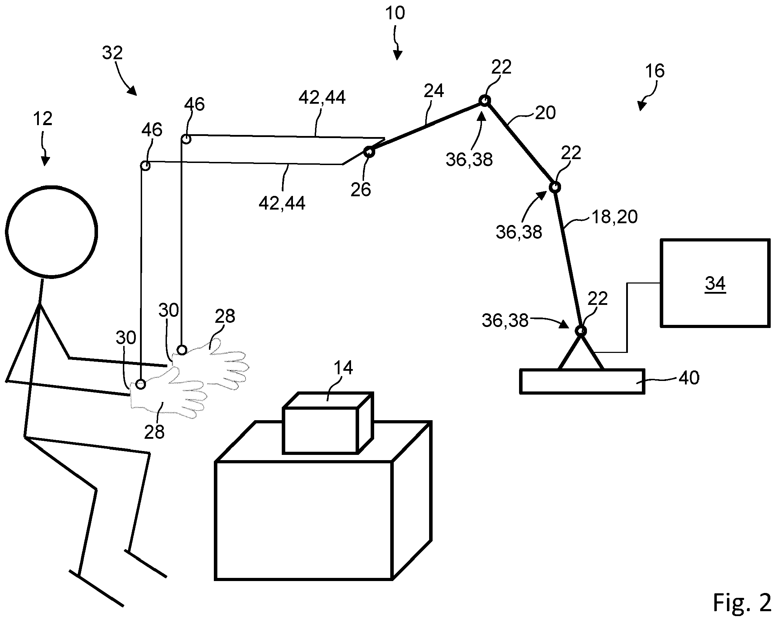

Die Erfindung wird im Folgenden anhand der Figur 2 näher erläutert.

Es zeigen:
- Figur 1: vereinfachte skizzierte Darstellung einer MRK-Anlage in einer ersten Augestaltung, die nicht Teil der Erfindung ist; und

- Figur 2: vereinfachte skizzierte Darstellung einer MRK-Anlage in einer zweiten Ausgestaltung gemäß der Erfindung.

In der nachfolgenden Beschreibung sowie in den Figuren sind für identische oder einander entsprechende Merkmale jeweils dieselben Bezugszeichen verwendet.

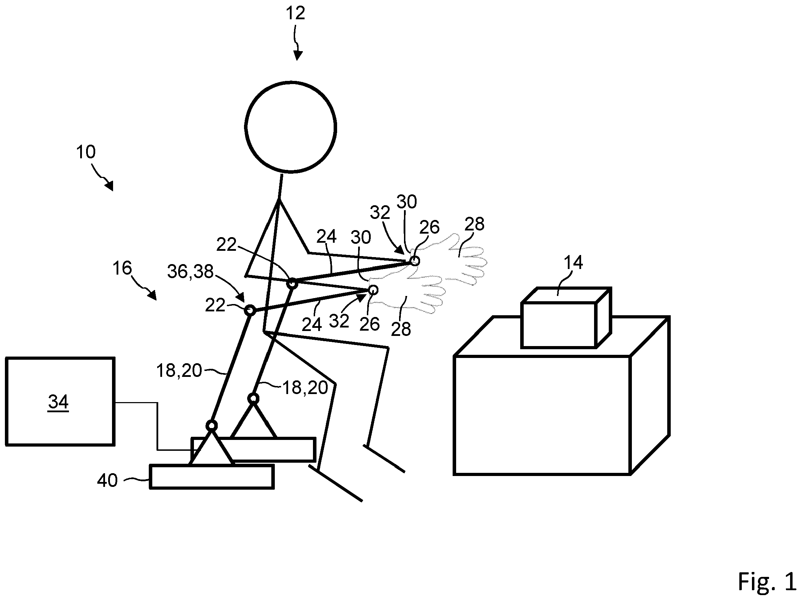

Die Figur 1 zeigt in vereinfachter skizzierter Darstellung eine erste Ausgestaltung einer MRK-Anlage, welche insgesamt mit dem Bezugszeichen 10 bezeichnet ist. Die MRK-Anlage 10 ist im dargestellten Beispiel insbesondere dazu ausgebildet, eine Bedienperson 12 beim Transportieren eines Gegenstandes 14 zu unterstützen.

Die MRK-Anlage 10 umfasst einen Roboter 16, welcher in dem dargestellten Beispiel zwei Manipulatoren 18 umfasst (in Figur 1 schematisch dargestellt). Beispielhaft und bevorzugt handelt es sich bei dem Roboter 16 um einen Leichtbauroboter mit zwei Roboterarmen. Jeder Manipulator 18 umfasst mehrere Glieder 20, welche über Gelenke 22 miteinander beweglich verbunden sind. Die Manipulatoren 18 weisen jeweils an ihrem letzten Glied 24 einen endständig angeordneten Endabschnitt 26 auf (nachfolgend noch näher erläutert). Der Endabschnitt ist z.B. ein Flanschabschnitt, der zur Verbindung mit einem Handhabungswerkzeug geeignet ist.

Die MRK-Anlage 10 umfasst ferner zwei Handanbindungen 28. Die Handanbindungen sind beispielhaft als Bedienhandschuhe ausgebildet, welche jeweils eine Öffnung (hier:
Handschuhöffnung 30) zum Einführen einer Hand der Bedienperson 12 aufweisen. Beispielhaft sind die Bedienhandhandschuhe 28 als Fingerhandschuhe ausgebildet. Die Handanbindung 28 kann aber auch andere Formen aufweisen, z.B. in der Art einer Manschette für die Handwurzel und/oder das Handgelenk einer Bedienperson. Die Bedienhandschuhe 28 sind jeweils über eine Kopplungseinrichtung 32 mit dem Endabschnitt 26 eines Manipulators 18 kraftgekoppelt verbunden, sodass zwischen Bedienhandschuh 28 und entsprechendem Manipulator 18 Kräfte und Drehmomente übertragen werden können.

Es ist möglich, dass die Bedienhandschuhe 28 fest mit dem Endabschnitt 26 des jeweiligen Manipulators 18 verbunden sind. Es ist auch möglich, dass die Bedienhandschuhe 28 über die Kopplungseinrichtung 32 an dem jeweiligen Endabschnitt 26 lösbar ankoppelbar und entkoppelbar und wieder ankoppelbar sind, bspw. über eine entsprechend ausgebildete Wechselkupplung.

Die Manipulatoren 18 des Roboters 16 sind beispielsweise kraft- und/oder drehmomentgesteuert. Zu diesem Zweck kann die MRK-Anlage 10 eine Steuereinrichtung 34 aufweisen, welche dazu ausgebildet ist, den Roboter 16 in Abhängigkeit einer auf die Manipulatoren 18 wirkenden Kraft bzw. Drehmoment anzusteuern. Beispielhaft und bevorzugt ist die Steuereinrichtung 34 derart ausgebildet, dass sie den Roboter 16 derart angesteuert, dass der Roboter 16 den jeweiligen Manipulator 18 in Einleitungsrichtung einer in diesen Manipulator 18 eingeleiteten Kraft bewegt.

Um eine Kraft- bzw. Drehmomenteinwirkung auf den jeweiligen Manipulator 18 zu detektieren, weist der Roboter 16 eine integrierte Sensoreinrichtung 36 auf, welche mit der Steuereinrichtung 34 zusammenwirkt. Die Sensoreinrichtung 36 weist mehrere Kraft- und/oder Drehmomentsensoren 38 auf, welche dazu ausgebildet ist, eine Kraft und/oder Drehmomenteinwirkung auf den jeweiligen Manipulator 18 zu erfassen. Beispielhaft und bevorzugt wirken die Sensoren 38 an den Gelenken 22 der Manipulatoren 18 und sind vorzugsweise auch dort angeordnet.

Zum Handhaben eines Gegenstands 14 kann die Bedienperson den Gegenstand 14 zunächst mittels der Bedienhandschuhe 28 wie gewöhnlich greifen. Beim Anheben des Gegenstands 14 nimmt dann der Roboter 16 die Gewichtskraft des Gegenstands 14 zumindest anteilig auf und leitet diese in den Boden 40 ein, sodass die Bedienperson 12 selbst nur eine geringe Last zu tragen hat. Um den Gegenstand 14 zu manövrieren (z.B. um den Gegenstand 14 an eine andere Position zu transportieren), muss die Bedienperson 12 den Gegenstand 14 lediglich wie gewöhnlich bewegen. Hierbei werden über den Bedienhandschuh 28 und die Kopplungseinrichtung 32 Kräfte auf den mit dem Bedienhandschuh 28 verbundenen Manipulator 18 übertragen, welche von den Sensoren 38 der integrierten Sensoreinrichtung 36 erfasst werden. Die Steuereinrichtung 34 steuert dann in Abhängigkeit der erfassten Kraft- bzw. Drehmomenteinwirkung den Roboter 16 derart an, dass dieser den mit dem Bedienhandschuh 28 gekoppelten Manipulator 18 in Einleitungsrichtung der Kraft verfährt. Insofern wird der Manipulator 18 einer Handbewegung der Bedienperson 12 nachgeführt.

Die Figur 2 zeigt eine Ausgestaltung einer MRK-Anlage 10 gemäss der Erfindung, umfassend einen Roboter 16 mit einem mehrgelenkigen Roboterarm 18.

Wie in Figur 2 vereinfacht schematisch dargestellt, sind die Bedienhandschuhe 28 über eine Seilverbindung 42 mit einem Endabschnitt 26 des Roboterarms 18 verbunden. Die Seilverbindung 42 umfasst in dem dargestellten Beispiel zwei Tragseile 44, wobei jedes Tragseil 44 mit einem Bedienhandschuh 28 verbunden ist. Die Tragseile 44 sind über eine Umlenkeinrichtung 46 mit dem Endabschnitt 26 des Roboterarms 18 verbunden.

Im Übrigen entspricht die MRK-Anlage 10 gemäß Figur 2 in Aufbau und Funktionsweise der in Bezug auf Figur 1 beschriebenen Ausgestaltung der MRK-Anlage 10.

## Patentansprüche

1. Mensch-Roboter-Kollaborations (MRK)-Anlage (10) zur Unterstützung einer Bedienperson beim Transportieren eines Gegenstandes, umfassend einen Roboter (16) mit wenigstens einem motorisch angetriebenen Roboterarm (18) mit einem Endabschnitt (26) und
eine in den Roboterarm (18) integrierte Sensoreinrichtung (36) zur Erfassung einer Kraft- und/oder Drehmomenteinwirkung auf den wenigstens einen Roboterarm (18),
wobei die MRK-Anlage (10) eine mit dem Endabschnitt (26) des wenigstens einen Roboterarms (18) verbundene Kopplungseinrichtung (32) sowie wenigstens eine Handanbindung (28) zur Kopplung mit einer Hand einer Bedienperson umfasst, wobei die wenigstens eine Handanbindung (28) über die Kopplungseinrichtung (32) mit dem Endabschnitt (26) kraftgekoppelt verbindbar ist,
wobei die Kopplungseinrichtung (32) eine Seilverbindung (42) umfasst, wobei die Seilverbindung (42) wenigstens ein Tragseil (44) umfasst, welches die wenigstens eine Handanbindung (28) mit dem Endabschnitt (26) des wenigstens einen Roboterarms (18) verbindet, und wobei eine Bewegung des wenigstens einen Roboterarms (18) direkt über eine Bewegung der Hand der Bedienperson mittels einer Erfassung durch die Sensoreinrichtung der sich aus dieser Handbewegung der Bedienperson resultierenden Kräfte und/ oder Drehmomente gesteuert werden kann.

2. MRK-Anlage (10) nach Anspruch 1, wobei die Handanbindung als Bedienhandschuh (28) zur Aufnahme einer Hand einer Bedienperson der MRK-Anlage (10) ausgebildet ist.

3. MRK-Anlage (10) nach Anspruch 1 oder 2, wobei die wenigstens eine Handanbindung (28) keine Sensoren und keine Steuereinrichtung umfasst.

4. MRK-Anlage (10) nach einem der vorherigen Ansprüche, ferner umfassend eine mit der Sensoreinrichtung (36) zusammenwirkende Steuereinrichtung (34), welche dazu ausgebildet ist, den Roboter (16) anzusteuern.

5. MRK-Anlage (10) nach einem der vorherigen Ansprüche, wobei die Sensoreinrichtung (36) mehrere Kraft- und/oder Drehmomentsensoren (38) umfasst.

6. MRK-Anlage (10) nach einem der vorherigen Ansprüche, wobei die wenigstens eine Handanbindung (28) eine Öffnung (30) zum Einführen einer Hand der Bedienperson (12) aufweist, wobei die Handanbindung (28) derart ausgebildet ist, dass dann, wenn die Handanbindung (28) mit der Kopplungseinrichtung (32) gekoppelt ist, die Öffnung (30) derart aufgespannt ist, dass eine Bedienperson (12) eine Hand in die Handanbindung (28) einschieben kann.

7. MRK-Anlage (10) nach einem der vorherigen Ansprüche, wobei die Kopplungseinrichtung (32) derart ausgebildet ist, dass die wenigstens eine Handanbindung (28) an dem Endabschnitt (26) des wenigstens einen Roboterarms (18) lösbar ankoppelbar ist.

8. MRK-Anlage (10) nach Anspruch 1, wobei die Seilverbindung (42) zwei Trageseile (44) umfasst, wobei jedes Tragseil (44) mit einer Handanbindung (28) verbunden ist und wobei die beiden Tragseile (44) über eine Umlenkeinrichtung (46) mit dem Endabschnitt (26) des wenigstens einen Roboterarms (18) verbunden sind.

## Claims

1. Human-robot collaboration (HRC) system (10) for assisting an operator when transporting an object, comprising
a robot (16) having at least one motor-driven robot arm (18) which has an end portion (26) and a sensor device (36) integrated into the robot arm (18) for detecting a force- and/or torque effect on the at least one robot arm (18),
wherein the HRC system (10) comprises a coupling device (32), connected to the end portion (26) of the at least one robot arm (18), and at least one hand attachment (28), for coupling to a hand of an operator, wherein the at least one hand attachment (28) can be connected in a force-coupled manner to the end portion (26) via the coupling device (32),
wherein the coupling device (32) comprises a cable connection (42), wherein the cable connection (42) comprises at least one suspension cable (44) which connects the at least one hand attachment (28) to the end portion (26) of the at least one robot arm (18), and wherein a movement of the at least one robot arm (18) can be controlled directly via a movement of the hand of the operator by means of the sensor device detecting the forces and/or torques resulting from this hand movement of the operator.

2. HRC system (10) according to claim 1, wherein the hand attachment is designed as an operating glove (28) for receiving a hand of an operator of the HRC system (10).

3. HRC system (10) according to claim 1 or claim 2,
wherein the at least one hand attachment (28) comprises no sensors and no control device.

4. HRC system (10) according to any of the preceding claims, further comprising a control device (34) which interacts with the sensor device (36) and is designed to control the robot (16).

5. HRC system (10) according to any of the preceding claims, wherein the sensor device (36) comprises a plurality of force- and/or torque sensors (38).

6. HRC system (10) according to any of the preceding claims, wherein the at least one hand attachment (28) has an opening (30) for inserting a hand of the operator (12), wherein the hand attachment (28) is designed such that when the hand attachment (28) is coupled to the coupling device (32), the opening (30) is stretched in such a way that an operator (12) can insert a hand into the hand attachment (28).

7. HRC system (10) according to any of the preceding claims, wherein the coupling device (32) is designed such that the at least one hand attachment (28) can be detachably coupled to the end portion (26) of the at least one robot arm (18).

8. HRC system (10) according to claim 1, wherein the cable connection (42) comprises two suspension cables (44), wherein each suspension cable (44) is connected to a hand attachment (28) and wherein the two suspension cables (44) are connected to the end portion (26) of the at least one robot arm (18) via a deflection device (46) .

## Revendications

1. Installation de collaboration homme-robot (MRK) (10) pour assister un opérateur au transport d'un objet comprenant :
un robot (16) avec au moins un bras de robot (18) motorisé, avec un segment d'extrémité (26) et une installation de capteurs (36) intégrée dans le bras de robot (18) pour saisir une action de force et/ou de couple sur au moins ce bras de robot (18),
l'installation (MRK) (10) a une installation de couplage (32) reliée au segment d'extrémité (26) de ce bras de robot (18) ainsi qu'au moins une fixation de main (28) pour être couplée à une main d'opérateur, cette fixation de main (28) pouvant être reliée par une installation de couplage (32) au segment d'extrémité (26) par un couplage de force,
l'installation de couplage (32) comprend une liaison par câbles (42), cette liaison par câbles (42) ayant au moins un câble porteur (44) qui relie cette fixation de main (28) au segment d'extrémité (26) de ce bras de robot (18), et le mouvement au moins de ce bras de robot (18) étant commandé directement par un mouvement de la main de l'opérateur saisi par l'installation de capteur des force et/ou couple résultant de ce mouvement de main de l'opérateur.

2. Installation (MRK) (10) selon la revendication 1, dans laquelle la fixation de main est un gant (28) pour recevoir une main de l'opérateur de l'installation (MRK) (10).

3. Installation (MRK) (10) selon la revendication 1 ou 2, dans laquelle au moins cette fixation de main (28) n'a ni capteur et ni installation de commande.

4. Installation (MRK) (10) selon l'une des revendications précédentes, comprenant en outre: une installation de commande (34) coopérant avec l'installation de capteurs (36) et commandant le robot (16).

5. Installation (MRK) (10) selon l'une des revendications précédentes, dans laquelle l'installation de capteurs (36) comprend plusieurs capteurs de force et/ou de couple (38).

6. Installation (MRK) (10) selon l'une des revendications précédentes, dans laquelle au moins cette fixation de main (28) a une ouverture (30) pour introduire une main de l'opérateur (12), la fixation de main (28) étant réalisée pour que lorsque la fixation de main (28) est couplée à l'installation de couplage (32), l'ouverture (30) est tendue de façon telle que l'opérateur (12) peut engager une main dans la fixation de main (28).

7. Installation (MRK) (10) selon l'une des revendications précédentes, dans laquelle l'installation de couplage (32) est réalisée pour coupler au moins une fixation de main (28) au segment d'extrémité (26) d'un bras de robot (18) par un couplage amovible.

8. Installation (MRK) (10) selon la revendication 1, dans laquelle la liaison par câble (42) comprend deux câbles porteurs (44), chaque câble porteur (44) étant relié à une fixation de main (28), et les deux câbles porteurs (44) étant reliés par une installation de renvoi (46) au segment d'extrémité (26) d'un bras de robot (18).
